# EUROPEAN PATENT SPECIFICATION

(11) **EP 2 924 663 B1**
(45) Date of publication and mention of the grant of the patent: **23.10.2019**
(21) Application number: 14161682.1
(22) Date of filing: 26.03.2014
(51) Int. Cl.: G07C 5/08, B64D 11/00, G07C 9/00

(54) **Automatic head count determination on board an aircraft**
Automatische Personenzählung an Bord eines Flugzeugs
Détermination automatique de l'effectif embarqué sur un avion

(43) Date of publication of application: 30.09.2015
(73) Proprietor: Airbus Operations GmbH, 21129 Hamburg (DE)
(72) Inventor: Hanka, Dr. Oliver, 80689 München (DE); Klose, Peter, 21129 Hamburg (DE); Heinisch, Matthias, 21129 Hamburg (DE); Schneele, Stefan, 81667 München (DE); Nuscheler, Dr. Franz, 81671 München (DE); Handwerker, Michael, 80809 München (DE)
(74) Representative: Frenkel, Matthias Alexander

(56) References cited:
- EP-A1- 1 100 050
- EP-A1- 2 397 995
- WO-A1-2006/032625
- WO-A2-2004/030336
- WO-A2-2006/130413
- DE-A1- 4 112 934
- US-A- 4 831 438
- US-A1- 2007 057 785

## Description

The present disclosure generally relates to the field of head count determination. More specifically, the present disclosure relates to a technique of determining an actual number of passengers on board an aircraft.

Aviation law requires verifying the number of passengers on board an aircraft. Only if the registered and actual number of passengers is identical and verified by the cabin crew, the doors of the aircraft may be closed. Nowadays, the head count of passengers is determined by the cabin crew by means of manual counting. Typically, several crew members count independently to increase reliability of the head count. This requires time, personal and is error-prone which leads to repetitive counting processes until it is verified that the counted number corresponds to the registered number of passengers. Similar processes exist for other means of transport such as cruise liners.

US 2012/0278904 discloses a content presentation system and method allowing content providers to regulate the presentation of content on a per-user-view basis. Content is distributed an associated licence option on the number of individual consumers of viewers allowed to consume the content. Consumers are presented with a content selection and a choice of licences allowing consumption of the content. The users consuming the content on a display device are monitored so that if the number of user-views licensed is exceeded, remedial action may be taken.

DE 41 12 934 A1 relates to a security control system for counting aircraft passengers. In DE 41 12 934, this system is referred to as "PAX GUARD". According to DE 41 12 934 A1, "PAX GUARD" allows to verify the number of passengers which have passed the gate with the number of passengers which have entered the aircraft. For this purpose, video cameras capture images of passenger seats and it is derived from the captured video images whether a passenger seat is taken by a passenger or not. Thus, in order to reliably detect all passengers on board the aircraft, the passengers must be at their seats.

Thus, the PAX GUARD system fails to reliably determine the number of passengers on board an aircraft.

Accordingly, there is a need for an improved technique for determining an actual number of passengers on board an aircraft. The system and method of the present invention are defined in claims 1 to 10.

According to a first aspect, a system for determining an actual number of passengers on board an aircraft, is provided. The system comprises a camera arrangement and a processing unit. The camera arrangement is configured to acquire image data on board the aircraft. The processing unit is configured to determine the actual number of passengers on board the aircraft, based on the acquired image data. The camera arrangement comprises one or more cabin corridor cameras and one or more cabin door cameras. The one or more cabin corridor cameras are configured and arranged to acquire image data of at least one or more cabin corridors of the aircraft. The one or more cabin door cameras are configured and arranged to acquire image data of one or more cabin doors of the aircraft.

In other words, the camera arrangement comprises one or more cabin corridor cameras which are configured and arranged to acquire image data of at least one or more cabin corridors of the aircraft, and one or more cabin door cameras which are configured and arranged to acquire image data of one or more cabin doors of the aircraft.

The one or more cabin corridor cameras are associated with one or more cabin corridors of the aircraft. The one or more cabin corridor cameras may respectively be configured and arranged to at least acquire image data of their associated cabin corridors. For example, a first cabin corridor camera may be associated with a first cabin corridor such that the first cabin corridor camera acquires image data of at least the first cabin corridor. For example, a second cabin corridor camera may be associated with a second cabin corridor such that the second cabin corridor camera acquires image data of at least the second cabin corridor. The one or more cabin corridor cameras may be configured and arranged to acquire image data of further sections of the aircraft cabin, in addition to their associated cabin corridors. In consequence, the one or more cabin corridor cameras may respectively be configured and arranged to acquire image data of the whole aircraft cabin, not including the passenger seats. For covering the passenger seats, additional cameras are provided as will be discussed below.

The one or more cabin door cameras are associated with one or more cabin doors of the aircraft. The one or more cabin door cameras may respectively be configured and arranged to acquire image data of their associated cabin doors. For example, a first cabin door camera may be associated with a first cabin door such that the first cabin door camera acquires image data of the first cabin door. For example, a second cabin door camera may be associated with a second cabin door such that the second cabin door camera acquires image data of the second cabin door.

The camera arrangement comprises one or more passenger seat cameras associated with one or more passenger seats of the aircraft. The one or more passenger seat cameras are configured and arranged to acquire image data of the associated one or more passenger seats. Each of the one or more passenger seat cameras may be configured and arranged to acquire image data of exactly one associated passenger seat. Alternatively, each of the one or more passenger seat cameras may be configured and arranged to acquire image data of multiple associated passenger seats, e.g., of an associated row of passenger seats.

The one or more passenger seat cameras may be configured and arranged to acquire image data of each passenger seat provided in the aircraft. In this way, each passenger seat in the means of transport, for example in the aircraft, may be covered by the one or more passenger seat cameras.

In case of an aircraft, the one or more passenger seat cameras may be provided in one or more Passenger Service Units, PSUs, provided on board the aircraft. A PSU is an aircraft component which is normally situated above each seat row in the overhead panel above the passenger seats in the cabin of aircraft. Amongst other things a PSU may comprise reading lights, loudspeakers, illuminated signs and automatically deployed oxygen masks and also louvres providing conditioned air. In addition to one or more of the aforementioned elements, one or more passenger seat cameras may be provided in at least a subset of the PSUs provided on board the aircraft.

The system comprises a control panel to initiate the image data acquisition. In case of an aircraft, the control panel may be part of or be configured as a Flight Attendant Panel (FAP) provided in the aircraft. FAPs are normally installed within the cabin and provide a remote user interface that may be operated by aircraft personnel to control and may monitor various functions around the cabin. After initiation of the image data acquisition, all cameras of the camera arrangement are instructed to acquire image data simultaneously with each other. Subsequent image data acquisition processes may also respectively be time-aligned with each other, e.g., the image data may be acquired simultaneously.

According to a first possible realization of the system according to the first aspect, the camera arrangement may be configured to forward the acquired image data to the processing unit. In accordance therewith, the processing unit may be configured to receive the acquired image data and to determine the actual number of passengers on board the aircraft, by detecting passengers in the received image data and by adding up the number of detected passengers. In other words, the respective one or more cameras of the camera arrangement - independent of whether cabin corridor cameras and/or cabin door cameras and/or passenger seat cameras are concerned - may forward one or more images actually acquired. In addition, the respective one or more cameras may forward information indicating the camera which actually captured the image(s) so that the processing unit may derive which image has been captured by which camera. The processing unit may receive the forwarded one or more images and may apply certain image processing algorithms in order to detect passengers on the forwarded images. The detected passengers may be summed up by the processing unit in order to arrive at the actual number of passengers.

For example, a first camera such as a cabin corridor camera, may acquire one or more images of a cabin corridor and may forward the acquired one or more images to the processing unit. In addition, a second camera such as a passenger seat camera, which may cover, for example, a row with three passenger seats, may acquire one or more images of the respective three passenger seats and may forward the acquired one or more images to the processing unit. The processing unit may receive the acquired images and may apply suitable image processing algorithms thereto. In this way, the processing unit may determine that, for example, three passengers are present in the cabin corridor (covered by the first camera). Further, the processing unit may determine that, for example, two passengers are present on said passenger seats (covered by the second camera). The processing unit may use these results to determine the actual number of passengers. For example, the processing unit may sum up the number of passengers derived from the image(s) received from and acquired by the first camera, the number of passengers derived from the image(s) received from and acquired by the second camera, and the number of passengers derived from the image(s) received from and acquired by the still further cameras to determine the actual number of passengers on board the aircraft.

According to a second possible realization of the system according to the first aspect, the camera arrangement may be configured to detect passengers in the acquired image data. In accordance therewith, the camera arrangement may be configured to forward information indicating the detected passengers to the processing unit. The processing unit may be configured to receive the information indicating the detected passengers and to determine the actual number of passengers on board the means of transport, for example on board the aircraft, by using the received information indicating the detected passengers. In other words, the respective one or more cameras of the camera arrangement - independent of whether cabin corridor cameras and/or cabin door cameras and/or passenger seat cameras are concerned - may apply certain image processing algorithms in order to detect passengers on the acquired images. The one or more cameras may then forward the result of the passenger detection to the processing unit. For example, each of the cameras involved in the passenger detection, may forward whether it has detected a passenger on its corresponding image(s). Each of the cameras involved in the passenger detection may also forward information how many passenger have been detected on its corresponding image(s). The processing unit may receive the forwarded information and may determine the number of passengers by summing up by the received information about the number of passengers.

For example, a first camera such as a cabin corridor camera may acquire one or more images of a cabin corridor and may detect by means of suitable image processing algorithms that three passengers are present in the cabin corridor (covered by the cabin corridor camera). In addition, a second camera such as a passenger seat camera, which may cover, for example, a row with three passenger seats, may acquire one or more images of the respective three passenger seats and may detect by means of suitable image processing algorithms that two passengers are present on said passenger seats. Both the first camera and the second camera may forward their detection results to the processing unit. The processing unit may receive the detection results and may use the received detection results to determine the number of passengers. For example, the processing unit may sum up the number of passengers detected by the first camera, the number of passengers detected by the second camera and the number of passengers detected by still further cameras to determine the actual number of passengers on board the aircraft.

The processing unit may be configured to compare the determined actual number of passengers on board the means of transport, for example on board the aircraft, to a registered number of passengers. The registered number of passengers may be made available to the processing unit in a number of different ways. For example, the system may comprise an input device configured to receive a user input specifying the registered number of passengers. The input device may be integrated in a control panel, e.g., a FAP, provided in the aircraft. Alternatively or additionally, the system may be connectable to an airline's infrastructure, e.g., to a check-in system, via a data connection in order to receive the registered number of passengers from the infrastructure via the data connection. Such data connection between the system and the infrastructure of the airline handling the respective flight may comprise or be configured as a wireless Gatelink connection. The check-in system may be the check-in system of the airline handling the respective flight.

A mismatch between the determined number of passengers and the registered number of passengers may be signalized to the cabin crew on the control panel. For example, one or more critical sections of the aircraft cabin, e.g., one or more sections of the cabin in which there is a mismatch between the determined number of passengers and the registered number of passengers, may be output on the control panel. Such critical sections may comprise one or more seats or seat rows or other sections of the cabin. The counting process may then be restarted manually by the cabin crew or automatically after a predetermined time.

The camera arrangement may comprise one or more infrared cameras. The one or more infrared cameras may be configured and arranged to acquire one or more infrared images of the cabin of the cabin of the aircraft. The infrared cameras may be separate entities different from the one or more cabin corridor cameras, the one or more cabin door cameras and/or the one or more passenger seat cameras. It is, however, also conceivable that the infrared cameras are part of, e.g., are integrated in, the one or more cabin corridor cameras, the one or more cabin door cameras and/or the one or more passenger seat cameras. By additionally considering the image data acquired by the one or more infrared cameras, hidden passengers, e.g., passengers hidden behind certain objects such as components of the cabin of the aircraft cabin.

The acquired image data may comprise at least one of one or more still images and one or more video images.

Images acquired by the camera arrangement may overlap or not overlap with each other. For example, one or more acquired images may overlap with each other and one or more acquired images may not overlap with each other.

In order to prevent double counting of detected passengers in overlapping sectors (e.g., sectors which may be covered by multiple cameras), at least one of the processing unit and the camera arrangement may be configured to detect such overlapping sectors. By detecting such overlapping sectors, it may be determined that a detected passenger has already been counted, e.g., because one passenger has already been detected in the same section at the same or at least similar time. For example, a first image may include a first area, for example an aircraft galley, and a second image taken by a different camera at the same time may include the same first area, for example the same aircraft galley. In order to prevent that both cameras determine the detection of the same passenger present in the first area, for example in the aircraft galley, at this time, it may be determined that the first area, for example the aircraft galley, is an overlapping section and thus, the detected passenger may only be counted once.

Passengers which have been hidden temporarily by an object or which have been in the lavatory during an initial counting process may be detected in one or more subsequent counting processes. In order to prevent double counting of other passengers during subsequent counting processes, face recognition techniques may be employed in at least one of the camera arrangement and the processing unit.

In general, at least one of the processing unit and the camera arrangement, e.g., one or more cameras of the camera arrangement, may be configured to recognize the faces of the passengers from the acquired image data. The face recognition of passengers may prevent double counting of one and the same passenger. In other words, a face recognition algorithm may store the face of each detected passenger and may, before determining that another passenger is detected, compare the face of a newly detected passenger with the faces already stored. When determining the actual number of passengers on board the aircraft, by detecting passengers in the received image data, the face recognition algorithm may realize that a detected passenger has already been counted (added to the number of passengers). In this case, the face recognitions algorithm may ensure the already counted passengers is not added again to the number of detected passengers. For example, face recognition of the passengers may be implemented when the one or more cameras capture multiple images or video images (as a series of still images). In this way, even if multiple images of the same passenger are captured, double counting of this passenger will be reliably prevented.

The system may further comprise a passenger information storage device. The passenger information storage device may be configured to store information about the recognized faces of the passengers. The (biometrical) information about the faces of the passengers may be retrieved from or forwarded by the component(s) of the processing unit and/or the camera arrangement responsible for the face recognition. The passenger information storage device may be included in the processing unit. The processing unit may be configured to compare the stored information about the recognized faces of the passengers with passenger information contained in a database. The database may contain passenger information which was previously input and/or collected and/or obtained by other personnel than the crew such as the border patrol, the airline or cruiser personnel and so on. In this way, it can not only be verified that the correct number of passengers is present on board the aircraft, but that also the correct passengers are present on board the aircraft. For example, the detected face of a passenger as stored in the passenger information storage device may be compared with biometrical passport data as stored in the database. If there is a match, e.g. the recognized face belongs to passport data contained in the database, it can be concluded that the detected passenger is allowed to be present on board the aircraft.

The system may further comprise a safety belt detection arrangement by means of which it may be checked whether the safety belts of at least the determined and registered passengers are closed.

According to a second aspect, a method for determining an actual number of passengers on board an aircraft, is provided. The method comprises the steps of acquiring image data on board the aircraft, by means of a camera arrangement and determining the actual number of passengers on board the aircraft, based on the acquired image data. The step of acquiring image data comprises acquiring image data of at least one or more cabin corridors of the aircraft, by means of one or more cabin corridor cameras, and acquiring image data of one or more cabin doors of the aircraft, by means of one or more cabin door cameras.

The step of acquiring image data may comprise acquiring image data of one or more passenger seats by means of one or more passenger seat cameras.

All of the above described aspects may be implemented by hardware circuitry and/or by software.

Even if some of the above aspects are described herein with respect to the processing unit, the camera arrangement or the system comprising the processing unit and the camera arrangement, these aspects may also be implemented as a method or as a computer program for performing or executing the method. Likewise, aspects described as or with reference to a method may be realized by suitable units in the processing unit, the camera arrangement, the system comprising the processing unit or by means of the computer program.

In the following, the present disclosure will further be described with reference to exemplary embodiments illustrated in the figures, in which:
- Figure 1: schematically illustrates a system for determining an actual number of passengers on board an aircraft;
- Figure 2a: schematically illustrates a first variant of a method performed in the system of figure 1;
- Figure 2b: schematically illustrates a second variant of a method performed in the system of figure 1;
- Figure 3: illustrates a passenger service unit in which a camera is integrated;
- Figure 4: schematically illustrates a second system for determining an actual number of passengers on board an aircraft;
- Figure 5a: schematically illustrates a first variant of a method performed in the system of figure 4;
- Figure 5b: schematically illustrates a second variant of a method performed in the system of figure 4; and
- Figure 6: schematically illustrates a method performed in the system of figure 1 or figure 4.

The skilled person will appreciate that the present disclosure may be practiced with other configuration than the specific number and arrangement of passenger seats discussed below to illustrate the present disclosure. Even if in the below the present disclosure is described only with respect to a single cabin corridor camera and a single cabin door camera, the disclosure may equally be practiced in an environment having multiple cabin corridor cameras and/or multiple cabin door cameras, e.g., one for each cabin corridor and/or one for each cabin door, respectively.

Those skilled in the art will further appreciate that functions explained hereinbelow may be implemented using individual hardware circuitry, using software functioning in conjunction with a programmed microprocessor or a general purpose computer, using an application specific integrated circuit (ASIC) and/or using one or more digital signal processors (DSPs). It will also be appreciated that when the present disclosure is described as a method, it may also be embodied in a device (i.e., the one or more cameras, the processing unit and/or the system comprising the processing unit described below), a computer processor and a memory coupled to a processor, wherein the memory is encoded with one or more programs that perform the methods disclosed herein when executed by the processor.

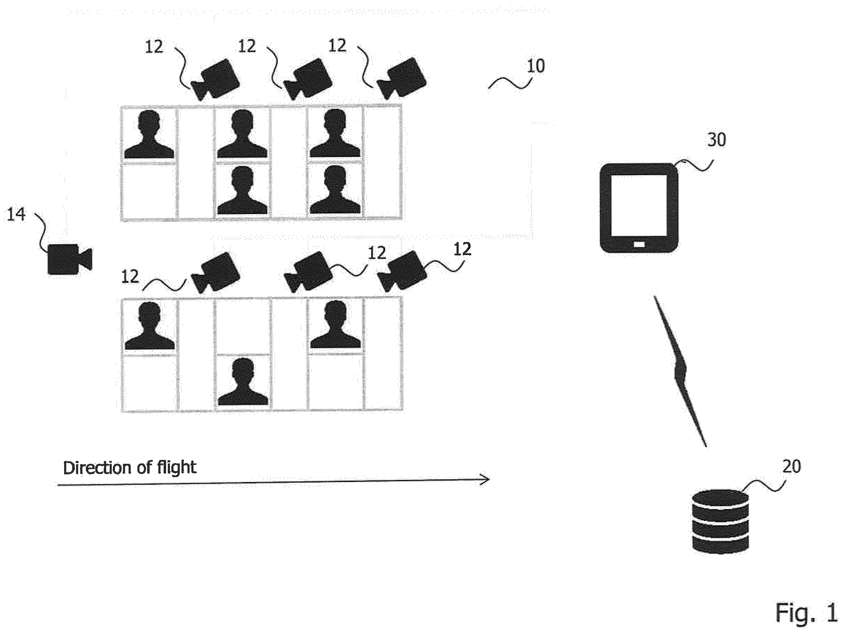

Figure 1 schematically illustrates a system for determining an actual number of passengers on board an aircraft. Further, figure 1 shows a section of an aircraft in which, by way of example, a cabin corridor as well as six passenger seats on the right side of the cabin corridor (right side, when looking into the direction of flight) and six passenger seats on the left side of the cabin corridor are arranged (left side, when looking into the direction of flight). The right and left sides are separated by the cabin corridor.

The system comprises a camera arrangement 10 and a (central) processing unit 20. Further, by way of example, the system comprises a control panel 30 which is, in the exemplary configuration shown in figure 1, configured as a Flight Attendant Panel (FAP) 30. The camera arrangement 10 comprises, by way of example, seven cameras to illustrate that any number of cameras may be provided in the system. In more detail, the camera arrangement 10 comprises one cabin corridor camera 14 which is configured and arranged to acquire (capture) images of a cabin corridor within the aircraft and corresponding image data. Further, six passenger seat cameras 12 are shown by way of example. It is, however, conceivable that the system is implemented without any passenger seat cameras 12. As exemplarily shown in figure 1, each of the six passenger seat cameras 12 covers a respective set of passenger seats. According to figure 1, each passenger seat camera 12 covers one row of each side of the cabin corridor. In the example of figure 1, two seats are covered by each passenger seat camera 12. However, it is equally possible that each passenger seat camera 12 covers exactly one passenger seat, or more seats per row (e.g., if a row comprises more seats), or even seats of multiple rows.

In the system of figure 1, the FAP 30 is connected to each camera, i.e. each of the six passenger seat cameras 12 and the cabin corridor camera 14, by means of a wired connection and to the processing unit 20 by means of a wireless connection.

By way of example, five seats on the right side of the cabin corridor are taken and one is empty. On the left side of the cabin corridor, three passenger seats are taken and three are empty, i.e. one in each row is empty and one in each row is taken. Corresponding image data is acquired by the passenger seat cameras 12. More specifically, each of the passenger seat cameras 12 on the right side respectively is configured and arranged to acquire one or more images of the respective passenger seats they cover. Each of the passenger seat cameras 12 on the left side respectively acquires one or more images of the respective passenger seats they cover.

In conventional systems, it may be concluded that eight passengers are present in the section of the aircraft shown in figure 1. However, if one or more passengers are currently in the cabin corridor or hidden by other passengers or obstacles while the passenger seat cameras 12 acquire images, these passengers cannot be detected although they are on board the aircraft.

In order to more reliably determine the actual number of passengers present on board the aircraft, the system comprises the cabin corridor camera 14. The cabin corridor camera 14 is arranged in the aircraft to cover the cabin corridor, i.e., the view of the cabin corridor camera 14 at least covers a section of the cabin corridor, and is configured to acquire one or more images of the cabin corridor. If it is assumed that that an additional passenger is not seated but rather is present in the cabin corridor, the system can correctly assume that nine passengers are present in the illustrated section of the aircraft.

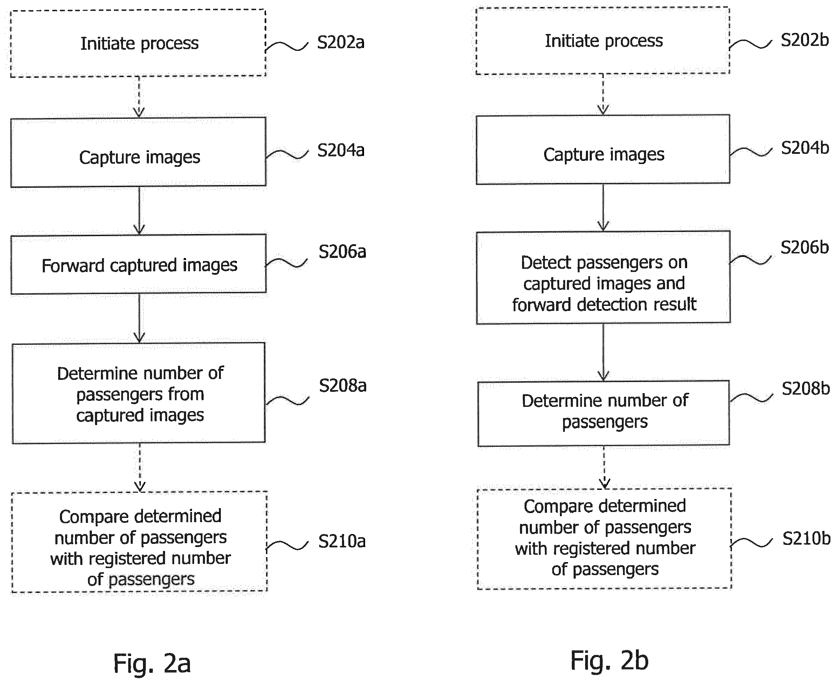

Two variants of methods for determining the number of passenger number by means of the system of figure 1 will be explained in the following with respect to figures 2a and 2b.

According to the first variant shown in figure 2a, the head count determination process is initiated by a crew member on the FAP 30 in a first step S202a. The head count determination process may be started after boarding or during the boarding process. In step S204a, the passenger seat cameras 12 and the cabin corridor camera 14 respectively acquire one or more images as image data. Then, in step S206a, the passenger seat cameras 12 and the cabin corridor camera 14 respectively forward the acquired image data to the FAP 30, which itself transmits the acquired image data (wirelessly) to the processing unit 20. The processing unit 20 applies image processing algorithms on the received images. The processing unit 20 is able to determine which image(s) is/are associated with (have been captured by means of which) camera. By means of the image processing algorithms applied, the processing unit 20 detects, for the image(s) of each camera, whether a passenger is present or not. The number of detected passengers is summed up by the processing unit 20 to determine the actual overall number of passengers (step S208a). In order to prevent double counting of passengers, e.g. in overlapping images, face recognition algorithms may be applied by the processing unit 20. For example, faces of newly detected passengers are compared with faces of already detected passengers and the number of passengers is only increased if the face of a newly detected passenger does not match the face of any previously detected passenger. In a further optional step S210a, the processing unit 20 compares the determined number of passengers with a registered number of passengers, i.e., the number of passengers which has been previously stored / registered in the system. The registered number of passengers may be input be the cabin crew into the FAP 30 or may be retrieved from the check-in system of the airline.

With reference to the specific exemplary arrangement of figure 1, each of the passenger seat cameras 12 and the cabin corridor camera 14 acquires one or more images and forwards the one or more images to the FAP 30, which itself forwards the image data to the processing unit 20. Based on the one or more images as taken by each of the passenger seat cameras 12 and the cabin corridor camera 14, the processing unit 20 determines that there is one passenger in the first row on the right side, that there are two passengers in the middle row on the right side and that there are two passengers in the last row on the right side. The processing unit 20 further determines that there is one passenger in each row on the left side. Still further, the processing unit 20 determines whether and, if to the affirmative, how many passengers are present in the image(s) taken by the cabin corridor camera 14. The processing unit 20 then sums up the number of detected passengers so as to determine the total number of passengers on board the aircraft.

According to the second variant shown in figure 2b, the head count determination process is initiated by a crew member on the FAP 30 in a first step S202b. Then, each of the passenger seat cameras 12 and the cabin corridor camera 14 acquires one or more images as image data (step S204b). In step S206b, each of the cameras, i.e., each of the passenger seat cameras 12 and the cabin corridor camera 14, applies image processing algorithms to detect whether a passenger is present in the acquired image(s). In order to prevent double counting of passengers, e.g. in overlapping images, face recognition algorithms may be applied by the cameras 12, 14. For example, faces of newly detected passengers are compared with faces of already detected passengers and the number of passengers is only increased if the face of a newly detected passenger does not match the face of any previously detected passenger. After determining whether a passenger is present in the image(s) or not, the cameras 12, 14 forward their determination results to the FAP 30. The determination result may, in a simple version, comprise information whether a camera has detected a passenger and, if to the affirmative, how many passengers have been detected by the respective camera 12, 14. The FAP 30 wirelessly transmits the determination results to the processing unit 20. The processing unit 20 then simply sums up the detection results of each camera 12, 14 in order to determine the number of passengers (step S208b). In a further optional step S210b, the determined number of passengers is compared with a registered number of passengers, i.e., the number of passengers which has been previously stored / registered in the system. The registered number of passengers may be input be the cabin crew into the FAP 30 or may be retrieved from the check-in system of the airline.

If it is, for example determined that the determined number of passengers does not match the registered number of passengers, e.g., the number of checked-in passengers, this may be signalized to the cabin crew on the FAP 30, for example. For example, one or more critical sections of the aircraft cabin in the sense of one or more sections of the cabin in which there is a mismatch (e.g., too few or too many passengers) between the determined number of passengers and the registered number of passengers may be output on the FAP 30. Such critical sections may be certain seat rows or seats of the aircraft. The counting process can then be restarted manually by the cabin crew, and/or the acquired images may be output on the FAP 30 on demand and/or the critical sections can be inspected manually.

With reference to figure 1, each of the passenger seat cameras 12 on the right side of the cabin corridor acquires one or more images and determines therefrom that there is one passenger in the first row, that there are two passengers in the second (middle) row and that there are two passengers in the last row. Further, each of the passenger seat cameras 12 on the left side of the cabin corridor acquires one or more images and determines therefrom that there is one passenger per row. Still further, the cabin corridor camera 14 acquires one or more images and derives therefrom the number of passengers in its view (in the cabin corridor). All of these cameras, i.e. each of the passenger seat cameras 12 and the cabin corridor camera 14, forward their results, i.e. the detected number of passengers, to the FAP 30 which transmits said information to the processing unit 20. The processing unit 20 sums up the number of passengers as determined by each camera 12, 14 so as to determine the total number of passengers on board the aircraft.

In addition to the above, e.g., in addition to each of the aforementioned variants, one or more of the passenger seat cameras 12 and/or the cabin corridor camera 14 can be equipped with an infrared camera (not shown). It is also conceivable that infrared cameras can be provided as separate entities. Independent of whether separate infrared cameras are provided or whether the infrared cameras are part of the one or more passenger seat cameras 12 and/or the cabin corridor camera 14, hidden passengers can be detected by means of the infrared cameras. For example, passengers hidden by certain objects such as newspapers, seats or (opened) overhead compartments can be detected. This increases reliability of the system even more.

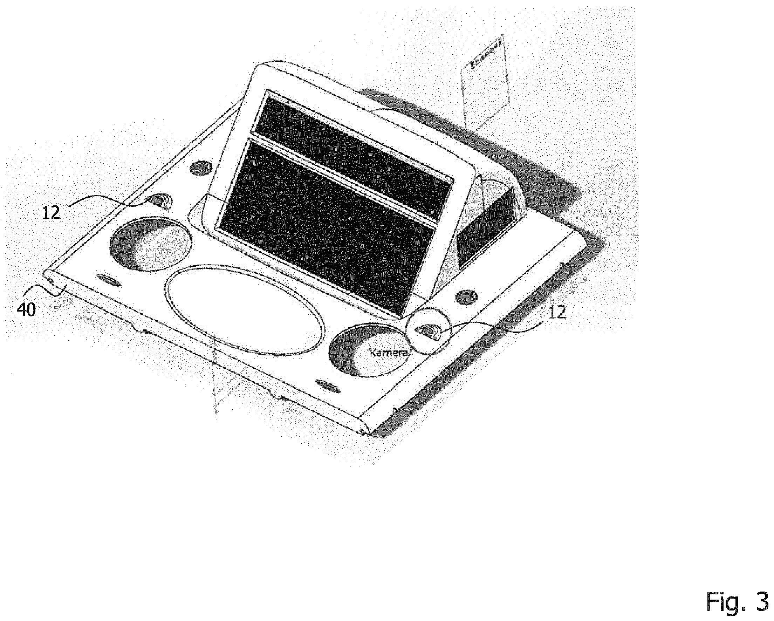

Figure 3 shows an exemplary configuration of how two passenger seat cameras 12 can be integrated into a passenger service unit (PSU) 40. Although two passenger seat cameras 12 are shown by way of example, any number of passenger seat cameras 12 may be integrated per PSU 40.

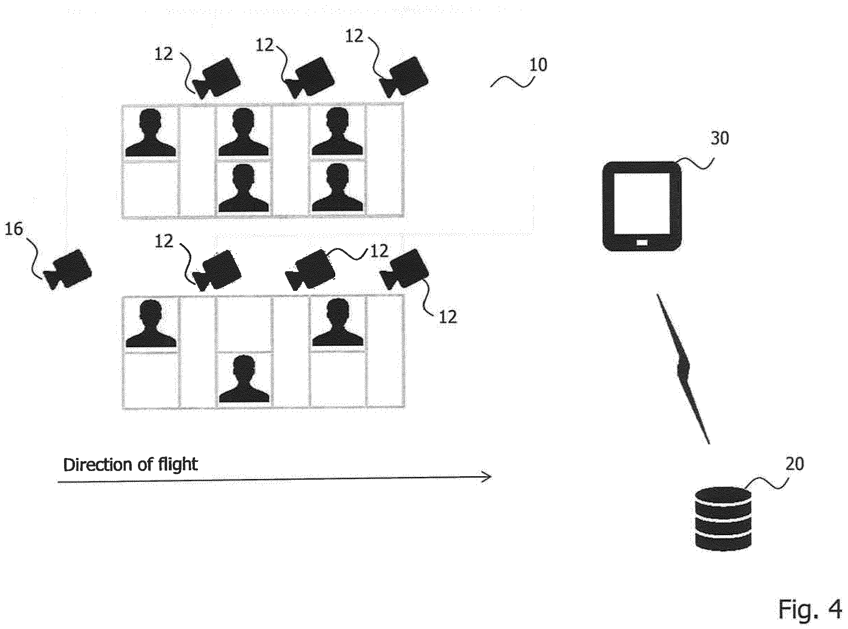

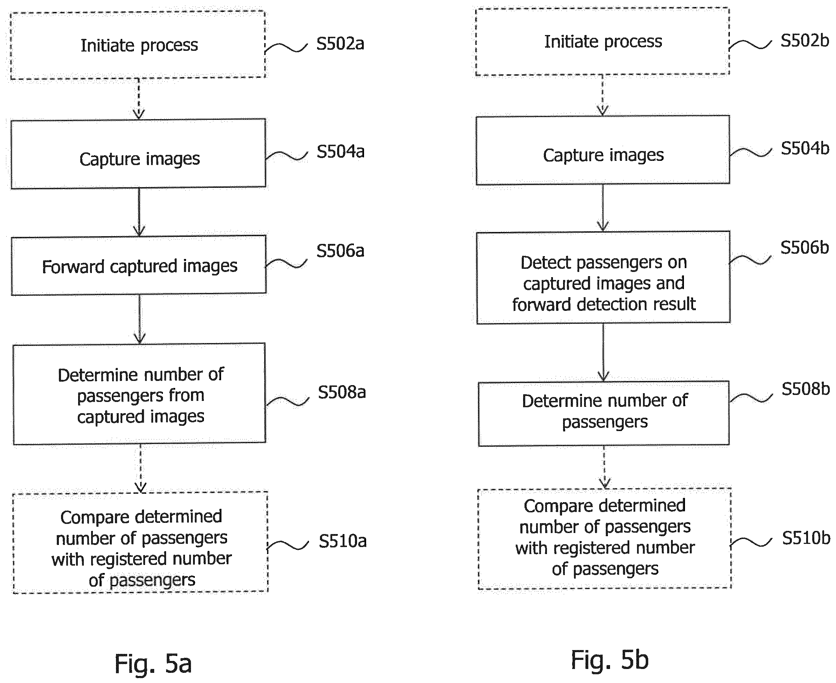

Figure 4 schematically shows a second system for determining the actual number of passengers on board an aircraft. The only difference between the second system shown in figure 4 and the first system shown in figure 1 is that, instead of the cabin corridor camera 14, a cabin door camera 16 is provided. Thus, all other aspects and details explained above with respect to first system (and the first and second variants as explained with respect to figures 2a and 2b) equally apply to the second system of figure 4 and the corresponding method variants of figures 5a and 5b as well.

The cabin door camera 16 is configured and arranged to acquire one or more images of a cabin door of the aircraft as image data. Although only one cabin door camera 16 is shown in figure 4, there may be plural cabin door cameras 16 per cabin door, or, in case of multiple cabin doors, multiple cabin door cameras 16 on board the aircraft, e.g., one for each door. As a variant both one or more cabin door cameras 16 and one or more cabin corridor cameras 14 may be provided. In addition, passenger seat cameras 12 may be provided or not.

According to a first variant of a method shown in figure 5a, which can be performed by the system of figure 4, the head count determination process is initiated by a crew member on the FAP 30 in a first step S502a. The head count determination process may be started during the boarding process. In step S504a, the passenger seat cameras 12 and the cabin door camera 16 respectively acquire one or more images as image data. The acquired image data is forwarded to the FAP 30 and transmitted to the processing unit 20 (step S506a). The processing unit 20 applies image processing algorithms on the received images. The processing unit is able to determine which image(s) are associated with (have been captured by means of which) camera. By means of the image processing algorithms applied, the processing unit 20 detects, for the image(s) of each camera, whether a passenger is present or not. The number of detected passengers is summed up by the processing unit to determine the actual overall number of passengers (step S508a). Based on the one or more images as taken by each of the passenger seat cameras 12 and the cabin door camera 16, the processing unit 20 determines that there is one passenger in the first row on the right side, that there are two passengers in the middle row on the right side and that there are two passengers in the last row on the right side. The processing unit 20 further determines that there is one passenger in each row on the left side. Still further, the processing unit 20 determines, from the image(s) taken by the cabin door camera 16, whether and, if to the affirmative, how many passengers are entering the cabin door. Again, face recognition algorithms may be applied. In a further optional step S510a, the determined number of passengers is compared with a registered number of passengers, i.e., the number of passengers which has been previously stored / registered in the system. The registered number of passengers may be input be the cabin crew into the FAP 30 or may be retrieved from the check-in system of the airline.

According to a second variant of a method shown in figure 5b, which can be performed by the system of figure 4, the head count determination process is initiated by a crew member on the FAP 30 in a first step S502b. Then, each of the passenger seat cameras 12 and the cabin door camera 16 acquires one or more images as image data (step S504b). In step S506b, each of the cameras, i.e., each of the passenger seat cameras 12 and the cabin corridor camera 16, applies image processing algorithms to detect whether a passenger is present in the acquired image(s). With reference to figure 4, each of the passenger seat cameras 12 on the right side of the cabin corridor acquires one or more images and determines therefrom that there is one passenger in the first row, that there are two passengers in the second (middle) row and that there are two passengers in the last row. Further, each of the passenger seat cameras 12 on the left side of the cabin corridor acquires one or more images and determines therefrom that there is one passenger per row. Still further, the cabin door camera 16 acquires one or more images and derives therefrom the number of passengers in its view (around the cabin door). For example, the cabin door camera 16 determines that no further passengers have entered the aircraft (example 1) or that two further passengers have entered the aircraft through the cabin door (example 2).

All of these cameras, i.e. each of the passenger seat cameras 12 and the cabin door camera 16, forward their results, i.e. the detected number of passengers, to the FAP 30 which transmits said information to the processing unit 20. Again, face recognition algorithms may be applied to prevent double counting. After having received the determination results of the cameras 12, 16, the processing unit 20 simply sums up the detection results of each camera 12, 16 in order to determine the number of passengers (step S508b). In accordance with example 1, the processing unit 20 determines that 8 passengers are on board the aircraft (five on the right side of the cabin corridor, three on the left side of the cabin corridor and zero that have additionally entered the aircraft). In accordance with example 2, the processing unit 20 determines that 10 passengers are on board the aircraft (five on the right side of the cabin corridor, three on the left side of the cabin corridor and two that have additionally entered the aircraft). In a further optional step S510b, the determined number of passengers is compared with a registered number of passengers, i.e., the number of passengers which has been previously stored / registered in the system. The registered number of passengers may be input be the cabin crew into the FAP 30 or may be retrieved from the check-in system of the airline.

In short, when the first variant explained above is applied, the cabin door camera 16 just forwards the images and the processing unit 20 determines the number of passengers from said images. When the second variant is applied, the cabin door camera 16 sums up the number of detected passengers and forwards the determined number to the processing unit 20. Alternatively, the cabin door camera 16 informs the processing unit 20 upon detection of a new passenger and the summation of the number of detected passengers is then performed in the processing unit 20. Independent of the exact realization, the number of all passengers having entered the aircraft can be reliably determined.

According to one option, the system only comprises one or more cabin door cameras 16 without any passenger seat cameras 12 and cabin corridor cameras 14.

Alternatively, the system of the present invention comprises one or more cabin door cameras 16 and additionally one or more cabin corridor cameras 14 and one or more passenger seat cameras 12. In this case, the camera(s) of one of the camera types are used as the main camera(s) on the basis of which the number of passengers is determined as described above. One or more of the camera(s) of the other camera types are then be used as (a) backup camera(s), on the basis of which the number of passengers is checked.

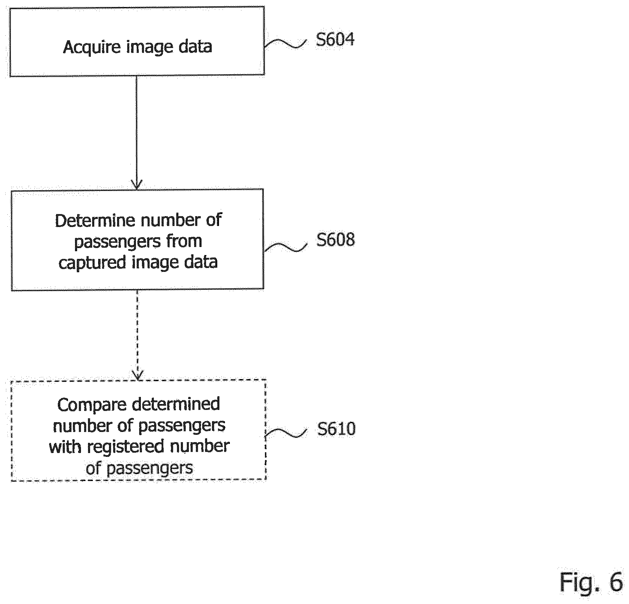

The common parts of the method variants of figures 2a, 2b, 5a and 5b are summarized briefly below and shown in figure 6. In other words, figure 6 shows a method which is in line with the specific method variants of figures 2a, 2b, 5a and 5b. Thus, the method of figure 6 can be implemented in both systems of figures 1 and 4. The method of figure 6 comprises acquiring, in step S604, image data on board the aircraft by means of a camera arrangement 10 and determining, in step S608, the actual number of passengers on board the aircraft based on the acquired image data. The step of acquiring image data comprises (i) acquiring image data of at least one or more cabin corridors of the aircraft by means of one or more cabin corridor cameras 14, and (ii) acquiring image data of one or more cabin doors of the aircraft by means of one or more cabin door cameras 16. In an optional step S610, the determined number of passengers may be compared with the registered number of passengers.

## Claims

1. A system for determining an actual number of passengers on board an aircraft, the system comprising:
- a camera arrangement (10) configured to acquire image data simultaneously on board the aircraft;
- a central processing unit (20) configured to determine the actual number of passengers on board the aircraft based on the acquired image data; and
- a control panel (30) being a user interface operated by personnel of the aircraft, wherein the control panel (30) is configured to initiate the image data acquisition and the determination of the actual number of passengers;
wherein the camera arrangement (10) comprises cameras of the following camera types:
one or more passenger seat cameras (12) associated with one or more passenger seats of the aircraft, the one or more passenger seat cameras (12) being configured and arranged to acquire image data of the associated one or more passenger seats, wherein the one or more passenger seat cameras (12) are configured and arranged to acquire image data of each passenger seat provided in the aircraft;
one or more cabin corridor cameras (14) being configured and arranged to acquire image data of at least one or more cabin corridors of the aircraft,
one or more cabin door cameras (16) being configured and arranged to acquire image data of one or more cabin doors of the aircraft;
wherein the central processing unit (20) is configured to determine the actual number of passengers on board the aircraft by summing up a number of passengers detected by the camera arrangement (10) or by the central processing unit (20) in the image data acquired by the one or more cameras of one camera type, and the one or more cameras of the other camera types are configured to be used as one or more backup cameras in order to check the determined number of passengers.

2. The system of claim 1, wherein the one or more passenger seat cameras (12) are provided in one or more Passenger Service Units, PSUs, provided on board the aircraft.

3. The system of any one of claims 1 or 2, wherein the camera arrangement (10) is configured to forward the acquired image data to the central processing unit (20), and the central processing unit (20) is configured to receive the acquired image data and to determine the actual number of passengers on board the aircraft by detecting passengers in the received image data and by adding up the number of detected passengers.

4. The system of any one of claims 1 to 2, wherein the camera arrangement (10) is configured to detect passengers in the acquired image data and to forward information indicating the detected passengers to the central processing unit (20), and the central processing unit (20) is configured to receive the information indicating the detected passengers and to determine the actual number of passengers on board the aircraft by using the received information indicating the detected passengers.

5. The system of any one of claims 1 to 4, wherein the central processing unit (20) is configured to compare the determined actual number of passengers on board the aircraft to a registered number of passengers.

6. The system of claim 5, wherein the system further comprises an input device configured to receive a user input specifying the registered number of passengers.

7. The system of claim 5 or 6, wherein the system is connectable to an infrastructure of an airline via a data connection and to receive the registered number of passengers from the infrastructure via the data connection.

8. The system of any one of claims 1 to 7, wherein the camera arrangement (10) comprises one or more infrared cameras, the one or more infrared cameras being configured and arranged to acquire one or more infrared images of the cabin of the aircraft.

9. The system of any one of claims 1 to 8, wherein the acquired image data comprises at least one of one or more still images and one or more video images.

10. A method for determining an actual number of passengers on board an aircraft, the method comprising the steps of:
initiating, by a control panel (30) being a user interface operated by personnel of the aircraft, image acquisition by a camera arrangement (10) and a determination of an actual number of passengers on board the aircraft by a central processing unit (20);
simultaneously acquiring image data on board the aircraft by means of the camera arrangement (10);
determining, by the central processing unit (20), the actual number of passengers on board the aircraft, based on the acquired image data;
wherein the step of acquiring image data comprises acquiring image data by means of cameras of the following camera types:
acquiring image data of each passenger seat provided in the aircraft by means of one or more passenger seat cameras (12) associated with one or more passenger seats of the aircraft, and
acquiring image data of at least one or more cabin corridors of the aircraft by means of one or more cabin corridor cameras (14), and
acquiring image data of one or more cabin doors of the aircraft by means of one or more cabin door cameras (16);
wherein the step of determining the actual number of passengers on board the aircraft comprises summing up a number of passengers detected by the camera arrangement (10) or by the central processing unit (20) in the image data acquired by means of the one or more cameras of one camera type, and the one or more cameras of the other camera types are used as one or more backup cameras, on the basis of which the determined number of passengers is checked.

## Patentansprüche

1. System zum Bestimmen einer tatsächlichen Anzahl von Fluggästen an Bord eines Flugzeugs, wobei das System umfasst:
- eine Kameraanordnung (10), die ausgebildet ist, Bilddaten gleichzeitig an Bord des Flugzeugs zu erfassen;
- eine zentrale Verarbeitungseinheit (20), die ausgebildet ist, die tatsächliche Anzahl von Fluggästen an Bord des Flugzeugs basierend auf den erfassten Bilddaten zu bestimmen; und
- ein Bedienfeld (30), das eine vom Personal des Flugzeugs bediente Benutzerschnittstelle ist, wobei das Bedienfeld (30) ausgebildet ist, die Bilddatenerfassung und die Bestimmung der tatsächlichen Anzahl von Fluggästen einzuleiten;
wobei die Kameraanordnung (10) Kameras der folgenden Kameratypen umfasst:
eine oder mehrere Fluggastsitzkameras (12), die einem oder mehreren Fluggastsitzen des Flugzeugs zugeordnet sind, wobei die eine oder mehreren Fluggastsitzkameras (12) ausgebildet und angeordnet sind, Bilddaten des oder der zugehörigen einen oder mehreren Fluggastsitze zu erfassen, wobei die eine oder die mehreren Fluggastsitzkameras (12) ausgebildet und angeordnet sind, Bilddaten von jedem im Flugzeug bereitgestellten Fluggastsitz zu erfassen;
eine oder mehrere Kabinendurchgangskameras (14), die ausgebildet und angeordnet sind, Bilddaten von mindestens einem oder mehreren Kabinendurchgängen des Flugzeugs zu erfassen,
eine oder mehrere Kabinentürkameras (16), die ausgebildet und angeordnet sind, Bilddaten von einer oder mehreren Kabinentüren des Flugzeugs zu erfassen,
wobei die zentrale Verarbeitungseinheit (20) ausgebildet ist, die tatsächliche Anzahl von Fluggästen an Bord des Flugzeugs durch Aufsummieren einer Anzahl von Fluggästen zu bestimmen, die durch die Kameraanordnung (10) oder durch die zentrale Verarbeitungseinheit (20) in den Bilddaten erkannt wird, die durch die eine oder die mehreren Kameras eines Kameratyps erfasst werden, und die eine oder die mehreren Kameras der anderen Kameratypen ausgebildet sind, als eine oder mehrere Reservekameras verwendet zu werden, um die bestimmte Anzahl von Fluggästen zu überprüfen.

2. System nach Anspruch 1, wobei die eine oder die mehreren Fluggastsitzkameras (12) in einer oder mehreren Fluggastserviceeinheiten, PSUs, die an Bord des Flugzeugs bereitgestellt sind, bereitgestellt sind.

3. System nach einem der Ansprüche 1 oder 2, wobei die Kameraanordnung (10) ausgebildet ist, die erfassten Bilddaten an die zentrale Recheneinheit (20) weiterzuleiten, und die zentrale Recheneinheit (20) ausgebildet ist, die erfassten Bilddaten zu empfangen und die tatsächliche Anzahl von Fluggästen an Bord des Flugzeugs durch Erfassen der Fluggäste in den empfangenen Bilddaten und durch Summieren der Anzahl der erfassten Fluggäste zu bestimmen.

4. System nach einem der Ansprüche 1 bis 2, wobei die Kameraanordnung (10) ausgebildet ist, Fluggäste in den erfassten Bilddaten zu erfassen und Informationen, die die erfassten Fluggäste angeben, an die zentrale Recheneinheit (20) weiterzuleiten, und die zentrale Recheneinheit (20) ausgebildet ist, die Informationen zu empfangen, die die erfassten Fluggäste angeben, und die tatsächliche Anzahl von Fluggästen an Bord des Flugzeugs unter Verwendung der empfangenen Informationen, die die erfassten Fluggäste angeben, zu bestimmen.

5. System nach einem der Ansprüche 1 bis 4, wobei die zentrale Recheneinheit (20) ausgebildet ist, die bestimmte tatsächliche Anzahl von Fluggästen an Bord des Flugzeugs mit einer registrierten Anzahl von Fluggästen zu vergleichen.

6. System nach Anspruch 5, wobei das System ferner eine Eingabevorrichtung umfasst, die ausgebildet ist, eine Benutzereingabe zu empfangen, die die registrierte Anzahl von Fluggästen angibt.

7. System nach Anspruch 5 oder 6, wobei das System über eine Datenverbindung mit einer Infrastruktur einer Fluggesellschaft verbindbar ist und die registrierte Anzahl von Fluggästen von der Infrastruktur über die Datenverbindung empfangen soll.

8. System nach einem der Ansprüche 1 bis 7, wobei die Kameraanordnung (10) eine oder mehrere Infrarotkameras umfasst, wobei die eine oder die mehreren Infrarotkameras ausgebildet und angeordnet sind, ein oder mehrere Infrarotbilder der Kabine des Flugzeugs aufzunehmen.

9. System nach einem der Ansprüche 1 bis 8, wobei die erfassten Bilddaten mindestens eines von einem oder mehreren Standbildern und einem oder mehreren Videobildern umfassen.

10. Verfahren zum Bestimmen einer tatsächlichen Anzahl von Fluggästen an Bord eines Flugzeugs, wobei das Verfahren die Schritte umfasst:
Einleiten, durch ein Bedienfeld (30), das eine vom Personal des Flugzeugs bediente Benutzerschnittstelle ist, von Bilderfassung durch eine Kameraanordnung (10) und einer Bestimmung der tatsächlichen Anzahl von Fluggästen an Bord des Flugzeugs durch eine zentrale Verarbeitungseinheit (20);
gleichzeitiges Erfassen von Bilddaten an Bord des Flugzeugs mittels der Kameraanordnung (10);
Bestimmen, durch die zentrale Recheneinheit (20), der tatsächlichen Anzahl von Fluggästen an Bord des Flugzeugs auf der Grundlage der erfassten Bilddaten;
wobei der Schritt des Erfassens von Bilddaten das Erfassen von Bilddaten mittels Kameras der folgenden Kameratypen umfasst:
Erfassen von Bilddaten jedes im Flugzeug bereitgestellten Fluggastsitzes mittels einer oder mehrerer Fluggastsitzkameras (12), die einem oder mehreren Fluggastsitzen des Flugzeugs zugeordnet sind, und
Erfassen von Bilddaten von mindestens einem oder mehreren Kabinendurchgängen des Flugzeugs mittels einer oder mehrerer Kabinendurchgangskameras (14), und
Erfassen von Bilddaten einer oder mehrerer Kabinentüren des Flugzeugs mittels einer oder mehrerer Kabinentürkameras (16);
wobei der Schritt des Bestimmens der tatsächlichen Anzahl von Fluggästen an Bord des Flugzeugs das Summieren einer Anzahl von Fluggästen umfasst, die von der Kameraanordnung (10) oder von der zentralen Verarbeitungseinheit (20) in den Bilddaten erkannt werden, die mittels der einen oder der mehreren Kameras eines Kameratyps erfasst werden, und die eine oder die mehreren Kameras der anderen Kameratypen als eine oder mehrere Reservekameras verwendet werden, auf deren Grundlage die bestimmte Anzahl von Fluggästen überprüft wird.

## Revendications

1. Système de détermination d'un nombre réel de passagers à bord d'un aéronef, le système comprenant :
un agencement de caméras (10) configuré pour acquérir simultanément des données d'image à bord de l'aéronef ;
une unité centrale de traitement (20), configurée pour déterminer le nombre réel de passagers à bord de l'aéronef sur la base des données d'image acquises ; et
un panneau de contrôle (30) étant une interface d'utilisateur utilisée par le personnel de l'aéronef, le panneau de contrôle (30) étant configuré pour amorcer l'acquisition de données d'image et la détermination du nombre réel de passagers ;
l'agencement de caméras (10) comprenant des caméras des types de caméra suivants :
une ou plusieurs caméras de siège de passager (12), associées à un ou plusieurs sièges de passager de l'aéronef, la ou les caméras de siège de passager (12) étant configurées et agencées pour acquérir des données d'image du ou des sièges de passager associés, la ou les caméras de siège de passager (12) étant configurées et agencées pour acquérir des données d'image de chaque siège de passager situé dans l'aéronef ;
une ou plusieurs caméras de couloir de cabine (14), configurées et agencées pour acquérir des données d'image d'au moins un ou plusieurs couloirs de cabine de l'aéronef ;
une ou plusieurs caméras de porte de cabine (16), configurées et agencées pour acquérir des données d'image d'une ou plusieurs portes de cabine de l'aéronef ;
l'unité centrale de traitement (20) étant configurée pour déterminer le nombre réel de passagers à bord de l'aéronef en additionnant un nombre de passagers détectés par l'agencement de caméras (10) ou par l'unité centrale de traitement (20) dans les données d'image acquises par la ou les caméras d'un type de caméra, et la ou les caméras des autres types de caméra étant configurées pour être utilisées comme caméra ou caméras de secours afin de vérifier le nombre déterminé de passagers.

2. Système selon la revendication 1, dans lequel la ou les caméras de siège de passager (12) sont situées dans un ou plusieurs blocs services passagers (PSU) situés à bord de l'aéronef.

3. Système selon l'une quelconque des revendications 1 et 2, dans lequel l'agencement de caméras (10) est configuré pour transférer les données d'image acquises à l'unité centrale de traitement (20), et
l'unité centrale de traitement (20) est configurée pour recevoir les données d'image acquises et pour déterminer le nombre réel de passagers à bord de l'aéronef en détectant des passagers dans les données d'image reçues et en additionnant le nombre de passagers détectés.

4. Système selon l'une quelconque des revendications 1 et 2, dans lequel l'agencement de caméras (10) est configuré pour détecter des passagers dans les données d'image acquises et pour transférer à l'unité centrale de traitement (20) une information indiquant les passages détectés, et
l'unité centrale de traitement (20) est configurée pour recevoir l'information indiquant les passagers détectés et pour déterminer le nombre réel de passagers à bord de l'aéronef en utilisant l'information reçue indiquant les passagers détectés.

5. Système selon l'une quelconque des revendications 1 à 4, dans lequel l'unité centrale de traitement (20) est configurée pour comparer le nombre réel déterminé de passagers à bord de l'aéronef à un nombre enregistré de passagers.

6. Système selon la revendication 5, le système comprenant en outre un dispositif d'entrée configuré pour recevoir une entrée d'utilisateur spécifiant le nombre enregistré de passagers.

7. Système selon la revendication 5 ou 6, le système pouvant être connecté à une infrastructure d'une compagnie aérienne par l'intermédiaire d'une connexion de données et pouvant recevoir le nombre enregistré de passagers depuis l'infrastructure par l'intermédiaire de la connexion de données.

8. Système selon l'une quelconque des revendications 1 à 7, dans lequel l'agencement de caméras (10) comprend une ou plusieurs caméras infrarouges, la ou les caméras infrarouges étant configurées et agencées pour acquérir une ou plusieurs images infrarouges de la cabine de l'aéronef.

9. Système selon l'une quelconque des revendications 1 à 8, dans lequel les données d'image acquises comprennent une ou plusieurs images fixes et/ou une ou plusieurs images vidéo.

10. Procédé de détermination d'un nombre réel de passagers à bord d'un aéronef, le procédé comprenant les étapes consistant à :
amorcer, par un panneau de contrôle (30) étant une interface d'utilisateur utilisée par le personnel de l'aéronef, une acquisition d'images par un agencement de caméras (10) et une détermination d'un nombre réel de passagers à bord de l'aéronef par une unité centrale de traitement (20) ;
acquérir simultanément des données d'image à bord de l'aéronef au moyen de l'agencement de caméras (10) ;
déterminer, par l'unité centrale de traitement (20), le nombre réel de passagers à bord de l'aéronef sur la base des données d'image acquises ;
l'étape d'acquisition de données d'image consistant à acquérir des données d'image au moyen de caméras des types de caméra suivants :
acquérir des données d'image de chaque siège de passager situé dans l'aéronef au moyen d'une ou plusieurs caméras de siège de passager (12) associées à un ou plusieurs sièges de passager de l'aéronef ; et
acquérir des données d'image d'au moins un ou plusieurs couloirs de cabine de l'aéronef au moyen d'une ou plusieurs caméras de couloir de cabine (14) ; et
acquérir des données d'image d'une ou plusieurs portes de cabine de l'aéronef au moyen d'une ou plusieurs caméras de porte de cabine (16) ;
l'étape de détermination du nombre réel de passagers à bord de l'aéronef consistant à additionner un nombre de passagers détectés par l'agencement de caméras (10) ou par l'unité centrale de traitement (20) dans les données d'image acquises au moyen de la ou des caméras d'un type de caméra, et la ou les caméras des autres types de caméra étant utilisées comme caméra ou caméras de secours, sur la base de laquelle ou desquelles le nombre déterminé de passagers est vérifié.
